# EUROPEAN PATENT SPECIFICATION

(11) **EP 1 164 709 B1**
(45) Date of publication and mention of the grant of the patent: **04.06.2003**
(21) Application number: 99961476.1
(22) Date of filing: 28.12.1999
(51) Int. Cl.: H01Q 1/24, H01Q 9/04, H01Q 5/00

(54) **CELLULAR TELEPHONE**
ZELLULARTELEFON
TELEPHONE CELLULAIRE

(43) Date of publication of application: 19.12.2001
(73) Proprietor: MITSUBISHI DENKI KABUSHIKI KAISHA, Tokyo 100-8310 (JP)
(72) Inventor: ITOH, Kenji, Chiyoda-ku, Tokyo 100-8310 (JP); KATSURA, Takatoshi, Chiyoda-ku, Tokyo 100-8310 (JP); IMANISHI, Yasuhito, Chiyoda-ku, Tokyo 100-8310 (JP); SHOJI, Hideaki, Chiyoda-ku, Tokyo 100-8310 (JP)
(74) Representative: Popp, Eugen, Dr.
(86) International application number: JP9907404
(87) International publication number: WO01048934

(56) References cited:
- DE-A- 19 837 568
- JP-A- 10 107 712
- US-A- 5 874 920

## Description

### Technical Field

The present invention relates to a portable telephone, and more particularly to a portable telephone capable of performing wireless communication with a wireless external interface device.

### Background Art

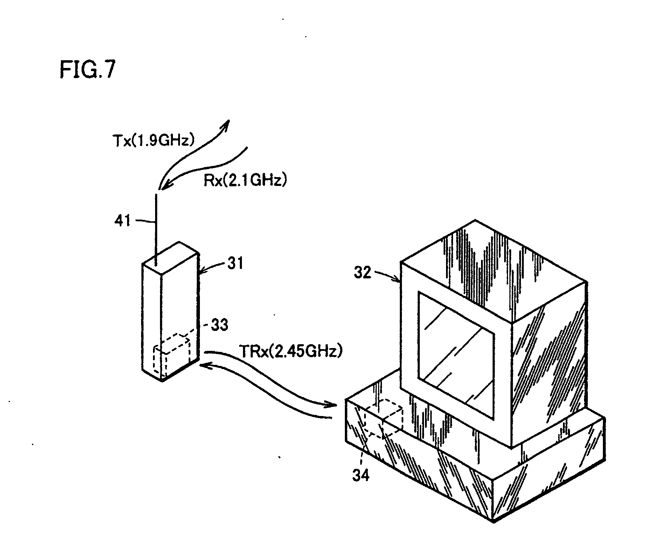

Referring to Fig. 7, in recent years, a technique is proposed in which wireless external interface devices 33, 34 are respectively disposed in a portable telephone 31 and in another digital equipment 34 (a personal computer in Fig. 7) to make it possible to send and receive data between the two devices by wireless communication. Here, it is assumed that the portable telephone 31 is of W-CDMA system in which data is transmitted in a 1.95 GHz band and received in a 2.14 GHz band, and data is transmitted and received between the wireless external interface devices 33, 34 in a 2.45 GHz band (ISM band).

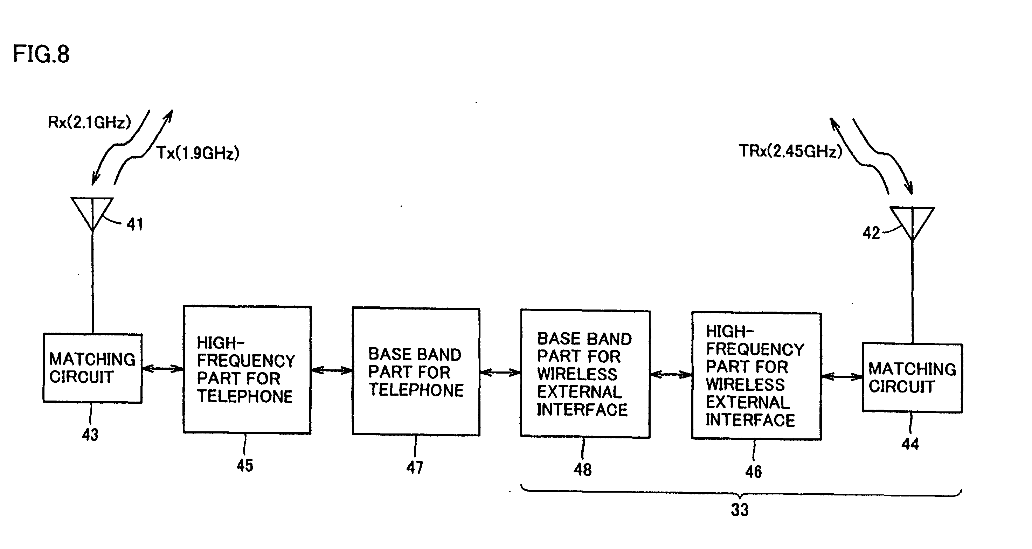

Fig. 8 is a block diagram illustrating a construction of such a portable telephone 31. Referring to Fig. 8, this portable telephone 31 includes an antenna 41 for telephone, an antenna 42 for wireless external interface, matching circuits 43, 44, a high-frequency part 45 for telephone, a high-frequency part 46 for wireless external interface, a base band part 47 for telephone, and a base band part 48 for wireless external interface.

The antenna 41 is used for transmitting and receiving a transmittance signal Tx and a receipt signal Rx for telephone, and the antenna 42 is used for transmitting and receiving a transmittance/receipt signal TRx for wireless external interface.

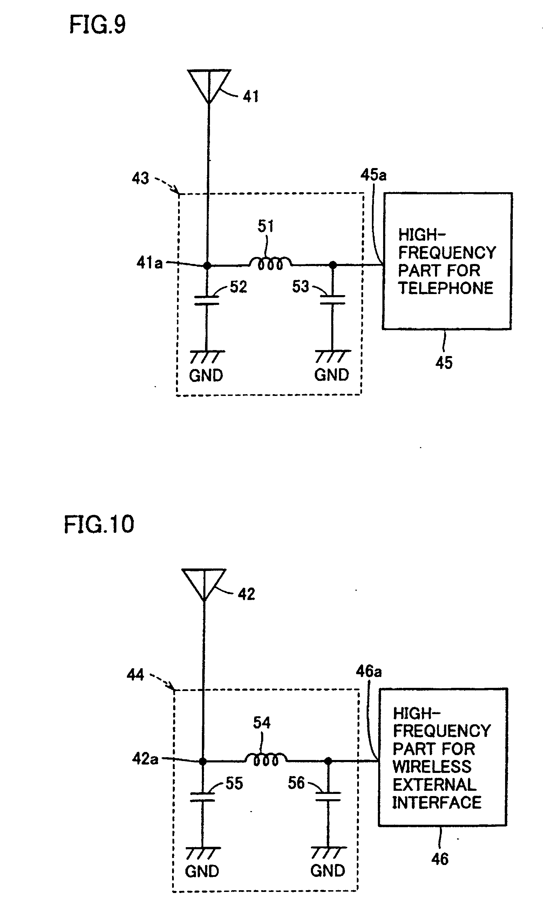

Referring to Fig. 9, the matching circuit 43 includes a coil 51 and capacitors 52, 53. The coil 51 is connected between a base end 41a of the antenna 41 and an input/output node 45a of the high-frequency part 45 for telephone. The capacitors 52, 53 are connected respectively between the base end 41a and the line of ground voltage GND and between the input/output node 45a and the line of ground voltage GND. The matching circuit 43 provides a matching between the antenna 41 and the high-frequency part 45 to provide a highly efficient input/output of the signals Rx, Tx.

Referring to Fig. 10, the matching circuit 44 includes a coil 54 and capacitors 55, 56. The coil 54 is connected between a base end 42a of the antenna 42 and an input/output node 46a of the high-frequency part 46 for wireless external interface. The capacitors 55, 56 are connected respectively between the base end 42a and the line of ground voltage GND and between the input/output node 46a and the line of ground voltage GND. The matching circuit 45 provides a matching between the antenna 42 and the high-frequency part 46 to provide a highly efficient input/output of the signal TRx.

The high-frequency part 45 for telephone modulates a carrier signal in accordance with a base band signal generated in the base band part 47 for telephone so as to generate the transmittance signal Tx. This signal Tx is transmitted to a telephone base station via the matching circuit 43 and the antenna 41. The high-frequency part 45 for telephone demodulates the received signal Rx given via the antenna 41 and the matching circuit 43 to generate a base band signal that is given to the base band part 47 for telephone.

The high-frequency part 46 for wireless external interface modulates a carrier signal in accordance with a base band signal generated in the base band part 48 for wireless external interface so as to generate the transmittance signal TRx. This signal TRx is transmitted to another wireless external interface device 34 via the matching circuit 44 and the antenna 42. The high-frequency part 46 for wireless external interface demodulates the received signal TRx given via the antenna 42 and the matching circuit 44 to generate a base band signal that is given to the base band part 48 for wireless external interface.

The base band part 47 for telephone generates a received data on the basis of the base band signal given from the high-frequency part 45 for telephone. During the call, voice is generated on the basis of this received data, and the voice is communicated to the user of the portable telephone. The base band part 47 for telephone generates a base band signal in accordance with the transmittance data generated on the basis of the voice of the user of the portable telephone, and gives the base band signal to the high-frequency part 45 for telephone. The received data and the transmittance data are communicated to the base band part 48 for wireless external interface in accordance with an instruction of the user of the portable telephone 31.

The base band part 48 for wireless external interface generates a received data on the basis of the base band signal given from the high-frequency part 46 for wireless external interface. Further, the base band part 48 for wireless external interface generates a base band signal on the basis of the data from the base band part 47 for telephone, and gives the base band signal to the high-frequency part 46 for wireless external interface.

Next, an operation of this portable telephone 31 will be described. During the normal call, the signal Rx received by the antenna 41 is given to the high-frequency part 45 for telephone via the matching circuit 43, and is converted into a base band signal by the high-frequency part 45. This base band signal is converted into a received data by the base band part 47 for telephone, and the received-call data is converted into a voice to be communicated to the user. The voice of the user is converted into a transmittance call data, and the transmittance call data is converted into a base band signal by the base band part 47 for telephone. This base band signal is converted into a transmittance signal Tx by the high-frequency part 45 for telephone, and the transmittance signal Tx is transmitted to the base station via the matching circuit 43 and the antenna 41.

In the case of transmitting the data (image data, music data, mails, and others) received by the portable telephone 31 to a personal computer 32, the signal Rx received by the antenna 41 is converted into a signal TRx by the matching circuit 43, the high-frequency part 45 for telephone, the base band part 47 for telephone, the base band part 48 for wireless external interface, and the high-frequency part 46 for wireless external interface, and this signal TRx is transmitted to the wireless external interface device 43 of the personal computer 32 via the matching circuit 44 and the antenna 42.

In the case of transmitting the data stored in the personal computer 32 to the portable telephone 31, the data stored in the personal computer 32 is converted into a signal TRx by the wireless external interface device 34, and is transmitted to the wireless external interface 33 of the portable telephone 31. The signal TRx received by the antenna 42 is converted into a received data by the high-frequency part 46 for wireless external interface and the base band part 48 for wireless external interface, and is stored into a memory part included in the base band part 48. The received data is converted into a transmittance signal Tx by the base band part 47 for telephone and the high-frequency part 45 for telephone in accordance with an instruction of the user of the portable telephone 31, and this signal Tx is transmitted to the base station via the matching circuit 43 and the antenna 41.

Now, as a method of mounting such a wireless external interface device 33, there are proposed a method of disposing the interface device 33 and the portable telephone in separate boxes and mechanically connecting the two boxes, a method of mounting the wireless external interface device 33 onto a back surface of a secondary battery of the portable telephone, and other methods.

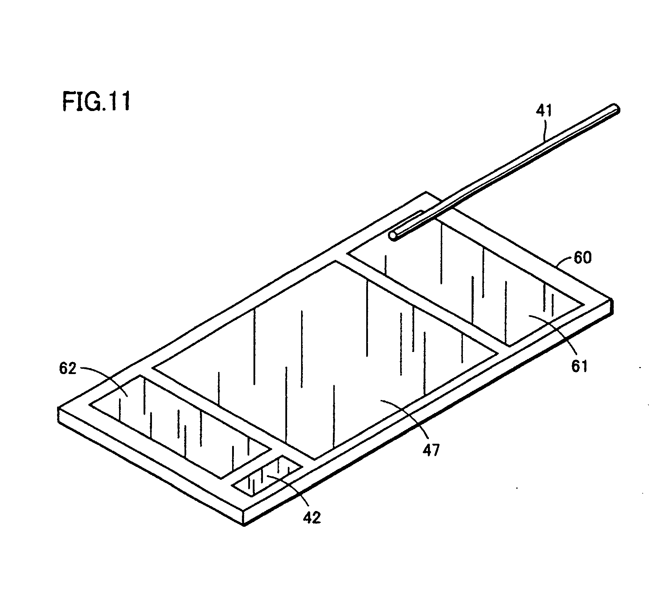

However, in the future, it is expected that a method of mounting the parts shown in Fig. 8 onto one substrate 60 will be adopted, as shown in Fig. 11. Referring to Fig. 11, a base band part 47 for telephone is disposed in the central part on a rectangular substrate 60 surface, and a high-frequency part for telephone + matching circuit 61 is disposed on one side thereof, and a base end of an antenna 41 is connected to the high-frequency part for telephone + matching circuit 61. Further, a base band part for wireless external interface + high-frequency part + matching circuit 62 and an antenna 42 are disposed on the other side of the base band part 47 for telephone.

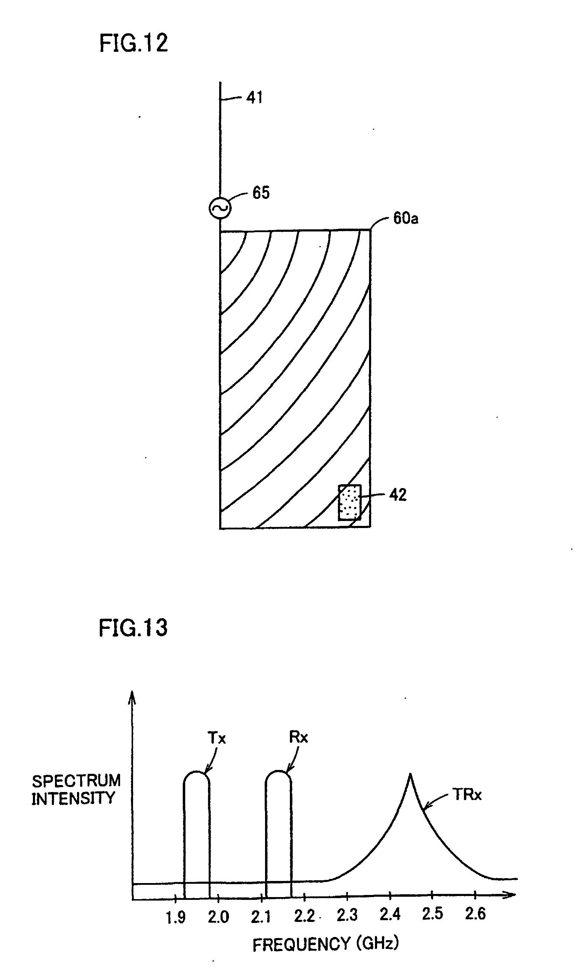

The substrate 60 is a laminate substrate including at least a ground metal layer 60a, a dielectric layer, and a wiring layer. Referring to Fig. 12, the ground metal layer 60a has the same rectangular shape as the substrate 60. An oscillator 65 is connected between one end of one diagonal line of the metal layer 60a and the base end of the antenna 41.
This oscillator 65 is disposed in the high-frequency part 45 for telephone of Fig. 8 and is, exactly speaking, connected to the base end of the antenna 41 via the matching circuit 43 and others.

In this case, a high-frequency current flows in the metal layer 60a, as shown by curves in Fig. 12, whereby the antenna 41 and the antenna 42 are coupled. Thus, in the case where the two antennae 41 and 42 are coupled, the following obstacle occurs.

Namely, referring to Fig. 13, the transmittance signal TRx of the wireless external interface devices 33, 34 contains a noise component of a wide band with its center at 2.45 GHz, and this noise component extends to the receiving band (2.14 GHz band) of the portable telephone 31.
Therefore, the receipt of this noise component by the antenna 41 causes deterioration of the receiving sensitivity of the portable telephone 31.

Moreover, when the receipt by the antenna 41 and the transmittance by the antenna 42 are carried out at the same time, the signal TRx from the antenna 42 will be at a higher level at the antenna 41 than the original received signal Rx, since the antennae 41, 42 are in the proximity with each other. For this reason, the amplification characteristics of the low noise amplifier (LNA) included in the high-frequency part 45 for telephone will be saturated, and this causes deterioration of the sensitivity. The above applies in the same manner to the wireless external interface device 33 side.

### Disclosure of the Invention

An object of the present invention is to provide a portable telephone having a high sensitivity.

The object of the present invention is achieved by providing a portable telephone capable of performing wireless communication with a wireless external interface device, the portable telephone including a laminate substrate having at least a rectangular ground metal layer; a first antenna disposed at one comer of the laminate substrate; a second antenna formed on a surface of the laminate substrate; a first transmitting/receiving circuit formed on a surface of the laminate substrate for performing transmittance/receipt of signals for telephone via the first antenna; and a second transmitting/receiving circuit formed on a surface of the laminate substrate for performing transmittance/receipt of a signal for wireless external interface via the second antenna, wherein the second antenna is disposed, on a diagonal line connecting between the one corner of the laminate substrate where the first antenna is disposed and a corner opposing thereto, at a position of 1/4 of a wavelength of the transmittance signal for telephone from the opposing corner.

A principal advantage of the present invention lies in that the decrease in sensitivity caused by interference between the first and second antennae can be restrained to a small value and a portable telephone having a high sensitivity can be provided, since the second antenna is disposed at a position where the coupling between the first and second antennae is the weakest on the surface of the laminate substrate.

Preferably, the second antenna is disposed in a rectangular region whose center is located at a point of 1/4 of the wavelength of the transmittance signal for telephone from the opposing corner, whose short side has a length of about 1/20 of the wavelength of the transmittance signal for telephone, and whose long side has a length of about 1/10 of the wavelength of the transmittance signal for telephone, the long side being parallel to the diagonal line. In this region, the coupling between the first and second antennae is weaker by about 10 decibel as compared with the corner of the laminate substrate.

Preferably, the second antenna is a chip antenna constructed with a helical or meandering antenna conductor formed in a dielectric substance. In this case, the second antenna can be easily constructed on the laminate substrate.

Preferably, a resonance circuit is further disposed between the first antenna and the first transmitting/receiving circuit for attenuating the signal for wireless external interface that is received by the first antenna. In this case, the signal for wireless external interface that is transmitted from the second antenna and received by the first antenna can be attenuated, whereby the decrease in sensitivity caused by interference between the first and second antennae can be restrained to a further small value.

Preferably, a resonance circuit is further disposed between the second antenna and the second transmitting/receiving circuit for attenuating the transmittance signal for telephone that is received by the second antenna. In this case, the transmittance signal for telephone that is transmitted from the first antenna and received by the second antenna can be attenuated, whereby the decrease in sensitivity caused by interference between the first and second antennae can be restrained to a further small value.

### Brief Description of the Drawings

Fig. 1 is a view illustrating an essential part of a portable telephone according to a first embodiment of the present invention;
Fig. 2 is a view illustrating a wavefront of a high-frequency current flowing through a ground metal layer shown in Fig. 1;

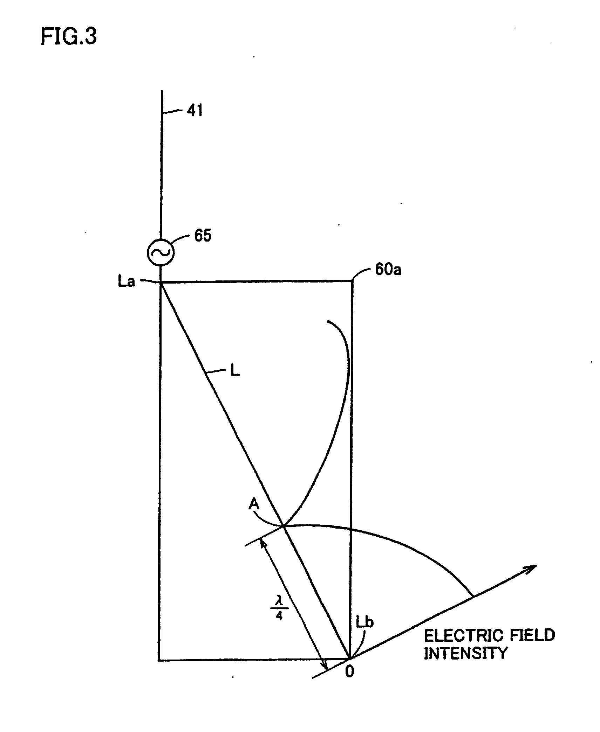

Fig. 3 is a view illustrating an electric field intensity in the ground metal layer shown in Fig. 2;
Fig. 4 is a diagram illustrating a result of calculation of an electric field intensity distribution in and around the ground metal layer shown in Fig. 2;
Fig. 5 is a circuit block diagram illustrating a construction of a matching circuit 10 in a portable telephone according to a second embodiment of the present invention;
Fig. 6 is a circuit block diagram illustrating a construction of a matching circuit 20 in the portable telephone described in Fig. 5;
Fig. 7 is a perspective view for describing a method of using a conventional portable telephone;
Fig. 8 is a block diagram illustrating a construction of the portable telephone shown in Fig. 7;
Fig. 9 is a circuit block diagram illustrating a construction of a matching circuit 43 shown in Fig. 8;
Fig. 10 is a circuit block diagram illustrating a construction of a matching circuit 44 shown in Fig. 8;
Fig. 11 is a view illustrating an internal structure of the portable telephone shown in Fig. 7;
Fig. 12 is a view for describing problems in the portable telephone shown in Fig. 7; and
Fig. 13 is a frequency spectrum diagram for describing the problems in the portable telephone shown in Fig. 7.

### Best Modes for Carrying out the Invention

### [First Embodiment]

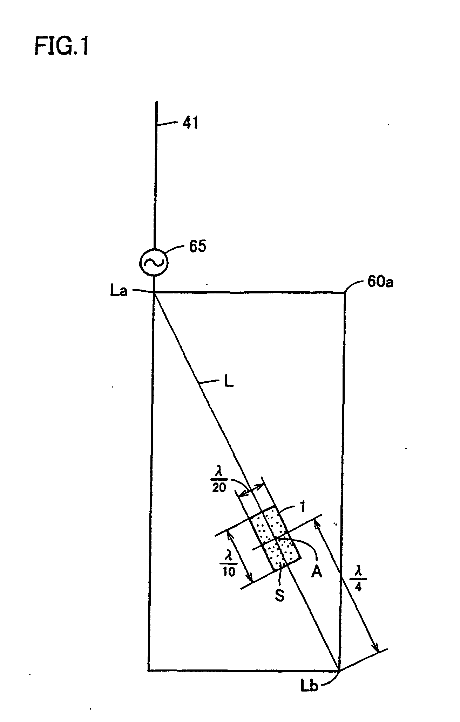

Fig. 1 is a view showing an essential part of a portable telephone according to the first embodiment of the present invention, and is a view that is compared with Fig. 12.

Referring to Fig. 1, in this portable telephone, an oscillator 65 is connected between one end La of one diagonal line L of a rectangular metal layer 60a and a base end of an antenna 41, and an antenna 1 for a wireless external interface device is disposed in such a manner as to cover a point A on the diagonal line L at a position of λ/4 (where λ is the wavelength of a transmittance signal Tx of the portable telephone) from the other end Lb of the diagonal line L.

The antenna 1 has a rectangular shape with a short side having a length of λ/20 and a long side having a length of λ/10, and is disposed so that its center is located at the point A and its long side is parallel to the diagonal line L. Assuming that the transmittance signal Tx is 2 GHz for simplification of calculation, λ will be about 150 mm, so that λ/4 = 37.5 mm, λ/10 = 15 mm, and λ/20 = 7.5 mm. The antenna 1 is a chip antenna constructed with a helical or meandering antenna conductor formed in a dielectric material. Since the construction other than the position of the antenna 1 is the same as that of the portable telephone 31 shown in Figs. 7 to 13, its description will not be repeated.

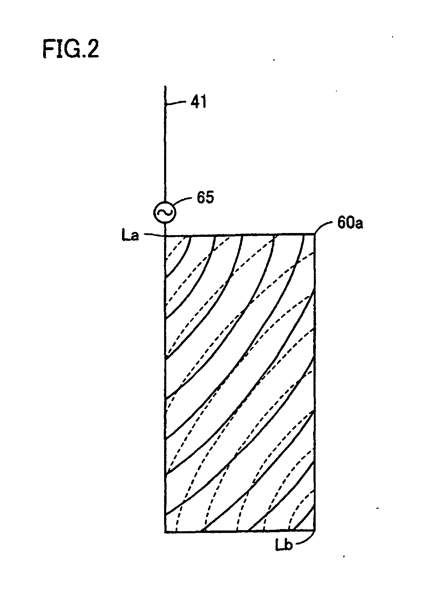

Hereafter, the reason why the antenna 1 is disposed in such a region S will be described. Fig. 2 is a view illustrating a wavefront of a high-frequency current flowing through the metal layer 60a of the substrate 60. Referring to Fig. 2, the wavefronts of the progressing wave of the high-frequency current are illustrated with solid lines, and the wavefronts of the reflected wave are illustrated with dashed lines. The wave of the high-frequency current proceeds from the point La where the oscillator 65 is connected, in the extending direction of the diagonal line L, and is reflected at the other end Lb of the diagonal line L to propagate in the direction opposite to the progressing wave. Therefore, the point Lb is an open end, whereby the electric field intensity attains the maximum value at the point Lb, and the electric field intensity attains the minimum value at the point A on the diagonal line L at a point of λ/4 from the point Lb. Further, in the aforesaid region S having a size of λ/20 x λ/10 with its center at the point A, the coupling between the antennae 41 and 1 will be weaker by about 10 decibel than at the other end Lb of the diagonal line L.

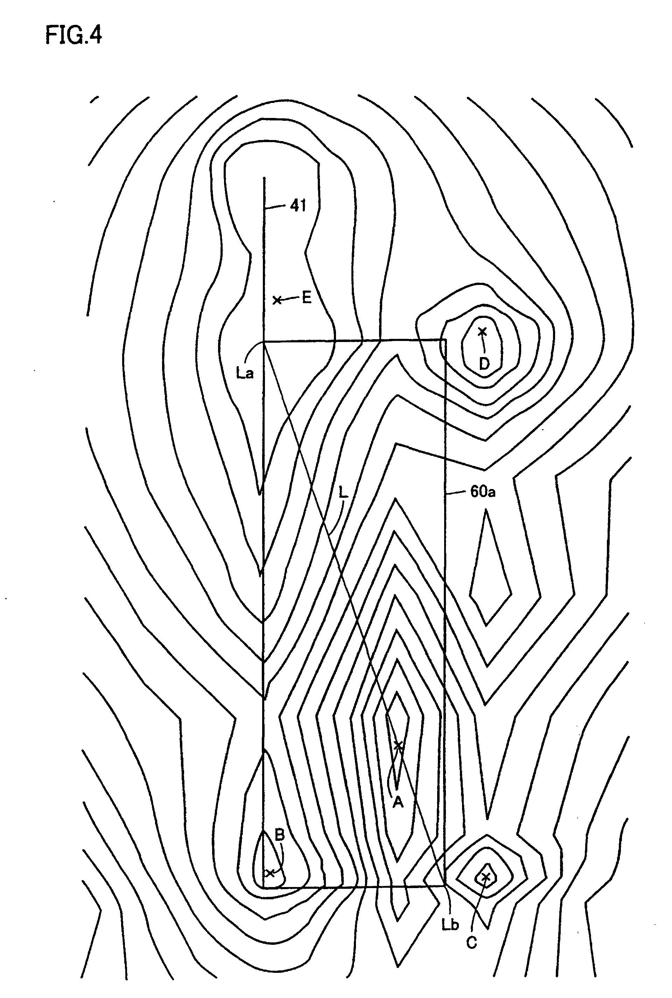

Fig. 4 is a diagram illustrating a result of calculation of the electric field intensity distribution in and around the metal layer 60a. From this distribution diagram also, it has been found out that the electric field intensity is at the minimum level at the point A, namely, that the coupling between the antennae 41 and 1 can be made to be the weakest by disposing the antenna 1 at the point A, whereby the decrease in sensitivity caused by interference between the antennae 41, 1 can be prevented. Here, since the electric field intensity is at the maximum level at points B, C, D, E near the four corners of the metal layer 60a, the coupling between the antennae 41 and 1 will be strong if the antenna 1 is disposed at the four corners of the metal layer 60a, whereby the decrease in sensitivity caused by interference between the antennae 41, will be large.

As described above, in the first embodiment, the decrease in sensitivity caused by interference between the antennae 41, 1 can be restrained to a small value because the antenna 1 is disposed in the region S where the coupling between the antennae 41, 1 is the weakest on the surface of the substrate 60.

Here, in the first embodiment, although the antenna 1 having a size of λ/20 x λ/20 is disposed in the region S having a size of λ/20 x λ/10, an antenna smaller than the antenna 1 may be disposed in the region S, or an antenna a little larger than the antenna 1 may be disposed in such a manner as to cover the region S.

Further, although the antenna 1 is disposed so that the long side of the antenna 1 is parallel to the diagonal line L, the antenna 1 may be disposed so that the long side of the antenna 1 is parallel to the long side of the metal layer 60a. In this case, the efficiency of mounting the antenna 1 onto the substrate 60 will be higher, although the coupling between the antennae 41, 1 will be a little stronger

### [Second Embodiment]

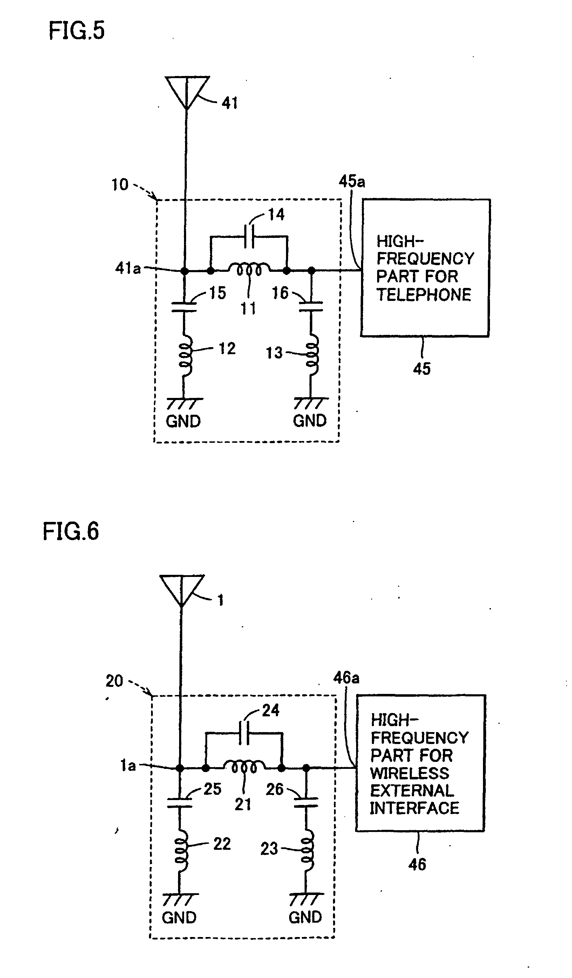

Figs. 5 and 6 are circuit block diagrams illustrating the matching circuits 10, 20 of a portable telephone according to the second embodiment of the present invention, and are views that are compared with Figs. 9 and 10.

Referring to Fig. 5, this matching circuit 10 aims at providing a highly efficient input/output of the signals Rx, Tx by providing a matching between the antenna 41 and the high-frequency part 45 for telephone, and prevents the decrease in the receiving sensitivity of the portable telephone by attenuating the signal TRx for wireless external interface that is received by the antenna 41. For this reason, the matching circuit 10 has resonance characteristics that attenuate the signal TRx for wireless external interface.

Specifically, the matching circuit 10 includes coils 11 to 13 and capacitors 14 to 16. The coil 11 and the capacitor 14 are connected in parallel between the base end 41a of the antenna 41 and the input/output node 45a of the high-frequency part 45 for telephone. The capacitor 15 and the coil 12 are connected in series between the base end 41a and the line of ground voltage GND. The capacitor 16 and the coil 13 are connected in series between the input/output node 45a and the line of ground voltage GND. The above-described matching and resonance characteristics can be obtained by setting each of the inductances of the coils 11 to 13 and each of the capacitances of the capacitors 14 to 16 to be suitable values.

Further, referring to Fig. 6, this matching circuit 20 aims at providing a highly efficient input/output of the signal TRx by providing a matching between the antenna 1 and the high-frequency part 46 for wireless external interface, and prevents the decrease in the receiving sensitivity of the wireless external interface device by attenuating the transmittance signal Tx for telephone that is received by the antenna 1. For this reason, the matching circuit 20 has resonance characteristics that attenuate the signal Tx for telephone.

Specifically, the matching circuit 20 includes coils 21 to 23 and capacitors 24 to 26. The coil 21 and the capacitor 24 are connected in parallel between the base end 1a of the antenna 1 and the input/output node 46a of the high-frequency part 46 for wireless external interface. The capacitor 25 and the coil 22 are connected in series between the base end 42a and the line of ground voltage GND. The capacitor 26 and the coil 23 are connected in series between the input/output node 46a and the line of ground voltage GND. The above-described matching and resonance characteristics can be obtained by setting each of the inductances of the coils 21 to 23 and each of the capacitances of the capacitors 24 to 26 to be suitable values.

The other construction and operation are the same as in the first embodiment, so that its description will not be repeated.

In this second embodiment, the matching circuit 10 between the antenna 41 for telephone and the high-frequency part 45 for telephone is allowed to have resonance characteristics that attenuate the signal TRx for wireless external interface that is received by the antenna 41, and the matching circuit 20 between the antenna 42 for wireless external interface and the high-frequency part 46 for wireless external interface is allowed to have resonance characteristics that attenuate the transmittance signal Tx for telephone that is received by the antenna 42, so that the decrease in sensitivity caused by interference between the antennae 41, 1 can be restrained to a small value.

## Claims

1. A portable telephone capable of performing wireless communication with a wireless external interface device (34), the portable telephone comprising:
a laminate substrate (60) having at least a rectangular ground metal layer (60a);
a first antenna (41) disposed at one corner (La) of said laminate substrate (60);
a second antenna (1) formed on a surface of said laminate substrate (60);
a first transmitting/receiving circuit (45, 47) formed on a surface of said laminate substrate (60) for performing transmittance/receipt /receipt of signals (Tx, Rx) for telephone via said first antenna (41); and
a second transmitting/receiving circuit (46, 48) formed on a surface of said laminate substrate (60) for performing transmittance/receipt of a signal (TRx) for wireless external interface via said second antenna (1),
wherein said second antenna (1) is disposed, on a diagonal line (L) connecting between the one corner (La) of said laminate substrate (60) where said first antenna (41) is disposed and a corner (Lb) opposing thereto, at a position of 1/4 of a wavelength of the transmittance signal (Tx) for telephone from said opposing corner (Lb).

2. The portable telephone according to claim 1, wherein said second antenna (1) is disposed in a rectangular region whose center is located at a point (A) of 1/4 of the wavelength of said transmittance signal (Tx) for telephone from said opposing corner (Lb), whose short side has a length of about 1/20 of the wavelength of said transmittance signal (Tx) for telephone, and whose long side has a length of about 1/10 of the wavelength of said transmittance signal (Tx) for telephone, said long side being parallel to said diagonal line (L).

3. The portable telephone according to claim 1, wherein said second antenna (1) is a chip antenna constructed with a helical or meandering antenna conductor formed in a dielectric substance.

4. The portable telephone according to claim 1, further comprising a resonance circuit (10) disposed between said first antenna (1) and said first transmitting/receiving circuit (45, 47) for attenuating the signal (TRx) for wireless external interface that is received by said first antenna (1).

5. The portable telephone according to claim 1, further comprising a resonance circuit (20) disposed between said second antenna (1) and said second transmitting/receiving circuit (46, 48) for attenuating the transmittance signal (Tx) for telephone that is received by said second antenna (1).

## Patentansprüche

1. Mobiltelefon, das in der Lage ist, drahtlose Kommunikation mit einer drahtlosen externen Schnittstellenvorrichtung (34) zu führen, wobei das Mobiltelefon umfasst:
ein Schichtsubstrat (60) mit mindestens einer rechteckigen Metallgrundschicht (60a);
eine erste Antenne (41), die an einer Ecke (La) des Schichtsubstrats (60) angeordnet ist;
eine zweite Antenne (1) die auf einer Fläche des Schichtsubstrats (60) ausgebildet ist;
eine erste Sende-/Empfangsschaltung (45, 47), die auf einer Fläche des Schichtsubstrats (60) ausgebildet ist, um ein Senden/Empfangen von Signalen (Tx, Rx) für das Telefon über die erste Antenne (41) zu bewerkstelligen; und
eine zweite Sende-/Empfangsschaltung (46, 48), die auf einer Fläche des Schichtsubstrats (60) ausgebildet ist, um ein Senden/Empfangen eines Signals (TRx) für die drahtlose externe Schnittstelle über die zweite Antenne (1) zu bewerkstelligen,
bei dem die zweite Antenne (1) auf einer diagonalen Linie (L), die eine Verbindung zwischen der einen Ecke (La) des Schichtsubstrats (60), an dem die erste Antenne (41) angeordnet ist, und einer dazu entgegengesetzten Ecke (Lb) herstellt, an einer Position angeordnet ist, die ¼ der Wellenlänge des Sendesignals (Tx) für das Telefon von der entgegengesetzten Ecke entfernt ist.

2. Mobiltelefon nach Anspruch 1, bei dem die zweite Antenne (1) in einem rechteckigen Bereich angeordnet ist, dessen Zentrum sich an einem Punkt (A) befindet, der ¼ der Wellenlänge des Sendesignals (Tx) für das Telefon von der entgegengesetzten Ecke (Lb) entfernt angeordnet ist, dessen kurze Seite eine Länge von ca. 1/20 der Wellenlänge des Sendesignals (Tx) für das Telefon aufweist, und dessen lange Seite eine Länge von ca. 1/10 der Wellenlänge des Sendesignals (Tx) für das Telefon aufweist, wobei die lange Seite zur diagonalen Linie (L) parallel ist.

3. Mobiltelefon nach Anspruch 1, bei dem die zweite Antenne (1) eine Chip-Antenne ist, die mit einem spiral- oder mäanderförmigen, in einem dielektrischen Material ausgebildeten Antennenleiter gestaltet ist.

4. Mobiltelefon nach Anspruch 1, darüber hinaus eine Resonanzschaltung (10) umfassend, die zwischen der ersten Antenne (41) und der ersten Sende-/Empfangsschaltung (45, 47) angeordnet ist, um das von der ersten Antenne (41) empfangene Signal (TRx) für die drahtlose externe Schnittstelle zu dämpfen.

5. Mobiltelefon nach Anspruch 1, darüber hinaus eine Resonanzschaltung (20) umfassend, die zwischen der zweiten Antenne (1) und der zweiten Sende-/Empfangsschaltung (46, 48) angeordnet ist, um das von der zweiten Antenne (1) empfangene Sendesignal (Tx) für das Telefon zu dämpfen.

## Revendications

1. Téléphone portatif capable de réaliser de la communication sans fil grâce à un dispositif (34) à interface externe sans fil, le téléphone portatif comprenant :
un substrat stratifié (60) doté d'au moins une couche métallique rectangulaire (60a) formant la masse ;
une première antenne (41), disposée à un coin (La) dudit substrat stratifié (60) ;
une deuxième antenne (1), formée sur une surface dudit substrat stratifié (60) ;
un premier circuit (45, 47) d'émission/réception, formé sur une surface dudit substrat stratifié (60), permettant de réaliser l'émission/réception de signaux téléphoniques (Tx, Rx) par l'intermédiaire de ladite première antenne (41) ; et
un deuxième circuit (46, 48) d'émission/réception, formé sur une surface dudit substrat stratifié (60), permettant de réaliser l'émission/réception d'un signal (TRx) pour interface externe sans fil, par l'intermédiaire de ladite deuxième antenne (1),
dans lequel ladite deuxième antenne (1) est disposée sur une connexion en ligne diagonale (L), de connexion entre le coin (La) dudit substrat stratifié (60), où ladite première antenne (41) est disposée, et un coin (Lb) opposé à elle, à une position d'un quart (1/4) de longueur d'onde du signal d'émission téléphonique (Tx) en partant du coin opposé (Lb).

2. Téléphone portatif selon la revendication 1, dans lequel ladite deuxième antenne (1) est disposée dans une zone rectangulaire dont le centre se trouve en un point (A) situé à un quart (1/4) de longueur d'onde du signal d'émission téléphonique (Tx) en partant du coin opposé (Lb), dont le côté court a une longueur d'environ 1/20 de la longueur d'onde dudit signal d'émission téléphonique (Tx) et dont le long côté a une longueur d'environ 1/10 de la longueur d'onde dudit signal d'émission téléphonique (Tx), ledit long côté étant parallèle à ladite ligne diagonale (L).

3. Téléphone portatif selon la revendication 1, dans lequel ladite deuxième antenne (1) est une antenne à puce, réalisée à partir d'un conducteur d'antenne hélicoïdal ou enroulé, formé dans une substance diélectrique.

4. Téléphone portatif selon la revendication 1, comprenant de plus un circuit résonnant (10), disposé entre ladite première antenne (1) et ledit premier circuit (45, 47) d'émission/réception, pour atténuer le signal (TRx) d'une interface externe sans fil qui est reçu par ladite première antenne (41).

5. Téléphone portatif selon la revendication 1, comprenant de plus un circuit résonnant (20), disposé entre ladite deuxième antenne (1) et ledit premier circuit (46, 48) d' émission/réception, pour atténuer le signal d'émission téléphonique (Tx) qui est reçu par ladite deuxième antenne (1).
